(19) Europäisches Patentamt / European Patent Office / Office européen des brevets

(11) **EP 2 566 031 A1**

(12) **EUROPEAN PATENT APPLICATION**
published in accordance with Art. 153(4) EPC

(43) Date of publication:
**06.03.2013 Bulletin 2013/10**

(51) Int Cl.:
**H02M 7/48** (2007.01)

(21) Application number: **10850676.7**

(22) Date of filing: **26.04.2010**

(86) International application number:
**PCT/JP2010/057386**

(87) International publication number:
**WO 2011/135657 (03.11.2011 Gazette 2011/44)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Mitsubishi Electric Corporation Tokyo 100-8310 (JP)**

(72) Inventors:
• **TAKEUCHI, Kazuhira Tokyo 100-8310 (JP)**
• **NISHIO, Naoki Tokyo 100-8310 (JP)**
• **NAKABAYASHI, Hirokazu Tokyo 100-8310 (JP)**

(74) Representative: **Pfenning, Meinig & Partner GbR Patent- und Rechtsanwälte Theresienhöhe 13 80339 München (DE)**

(54) **SYSTEM INTERCONNECTION INVERTER**

(57) Output power of a solar cell is directly detected, a stabilized operating point is found by changing a gate pulse width that specifies an on-time width of a switch element of a converter, and a start-up determination is performed by using output power at the stabilized oper- ating point. Accordingly, a standby time until start of the start-up determination is shortened, and a start-up determination can be performed highly accurately in a short time without being affected by the amount of solar radiation, even under low solar radiation.

FIG.1

EP 2 566 031 A1

**Description**

Field

The present invention relates to a system interconnection inverter used in a solar power generation system.

Background

A system interconnection inverter used in a solar power generation system includes a converter that converts DC power generated by a solar cell composed of a plurality of solar cell modules to DC power, which is a desired DC voltage, an inverter circuit that converts output power of the converter to AC power, and an output relay that opens and closes a connection path between an output end of the inverter circuit and a commercial power system.

In a solar power generation system, start-up control is executed in such a manner that, when generated power exceeds power required for system interconnection, a system interconnection inverter is started up by closing an output relay, or when the generated power is not power for interconnection, it is determined that the generated power is insufficient, and the output relay is opened to set the system interconnection inverter to a standby state.

In this case, when a start-up determination of the system interconnection inverter cannot be performed accurately, even if a solar cell starts power generation, it is determined that the generated power is insufficient and the system interconnection inverter is frequently set to a standby state. When the system interconnection inverter frequently repeats switching of its state between a start-up state and a standby state, the number of opening and closing the output relay increases, thereby causing a problem in that the operating life of a contact of the output relay is shortened.

To handle such a problem, for example, Patent Literature 1 proposes a method of performing a start-up determination of a system interconnection inverter accurately. A conventional start-up determining procedure described in Patent Literature 1 is explained below.

(1) When an output voltage of a solar cell exceeds a predetermined value, a converter is caused to start its operation in a state with an operation of an inverter circuit being stopped, and it is monitored whether charging of a capacitor forming an input voltage of the inverter circuit is completed within a predetermined time since start of the operation of the converter. When charging of the capacitor is completed within the predetermined time, power charged to the capacitor is computed based on a change in a charging voltage of the capacitor within a required time until completion and the required time, and a maximum power point of the solar cell is estimated based on the computed charging power.

The estimation of the maximum power point is performed based on a fact that the maximum power point of the solar cell is present at a voltage in about 80% of a no-load voltage of the solar cell. That is, because the characteristics of the solar cell are constant, the maximum power point of the solar cell is estimated based on the computed charging power by obtaining a rate of the output voltage of the solar cell at the time of computing the power with respect to the voltage at the maximum power point.

When charging of the capacitor is not completed within the predetermined time since start of the operation of the converter, it is determined that the generated power is insufficient. In this case, the procedure (1) is performed again after standby for a predetermined time.

(2) It is determined whether to start up the system interconnection inverter based on an estimated maximum power point. That is, it is determined that start-up can be performed when the estimated maximum power point of a solar cell is larger than a predetermined value to operate an inverter circuit, and power is supplied to a commercial power system by closing a relay. On the other hand, when the estimated maximum power point of the solar cell is smaller than the predetermined value, it is determined that generated power is insufficient, and the procedure (1) is performed again after standby for a predetermined time.

Citation List

Patent Literature

Patent Literature 1: Japanese Patent Application Laid-open No. 2009-247184 (FIG. 2)

Summary

Technical Problem

However, the convention technique described above have the following problems.
First, because the generated current is less in the morning and evening, during which the amount of solar radiation is smaller, a charging current to a capacitor decreases and thus it takes a longer time for charging. Therefore, according to the method of computing power charged to the capacitor based on the change in the charging voltage to the capacitor and the required time, when the amount of solar radiation is small, computation of power takes time, and thus a start-up determination also takes time.

Furthermore, because the amount of power generated by solar cells depends on the amount of solar radiation, the system interconnection inverter inevitably repeats switching of a state between a start-up state and a standby state as described above. In the procedure (1) described above, when stored charge at the time of previous start-up remains in the capacitor, power charged to the capacitor is computed this time based on a change in a charging voltage and a required time from a certain charging voltage. In this case, because charging is completed early, the accuracy of power computation decreases. Therefore, according to the method of computing power based on the change in the charging voltage to the capacitor, when a start-up determination is to be started, if the charging voltage is higher than a predetermined value, the start-up determination needs to be waited until the charging voltage becomes equal to or lower than a predetermined value. Accordingly, a standby time until start of a start-up determination increases.

Further, because the maximum power point is an estimated value, it is required to give some allowance to a minimum value of the predetermined value (starting power) used for the start-up determination while assuming an estimation error. That is, the minimum value of the predetermined value (starting power) used for the start-up determination cannot be fixed to a value accurately reflecting the power required for the system interconnection. Therefore, while occurrence of a state where switching of a state between a start-up state and a standby state of the system interconnection inverter is frequently repeated can be avoided, the determination accuracy of the system interconnection inverter becomes insufficient.

The present invention has been achieved in view of the above problems, and an object of the present invention is to provide a system interconnection inverter that is used in a solar power generation system and can perform a start-up determination highly accurately in a short time without being affected by the amount of solar radiation, while making a standby time until start of the start-up determination be short.

Solution to Problem

To solve the above problems and achieve an object, there is provided a system interconnection inverter including a step-down converter that steps down a DC voltage output from a solar cell to a desired DC voltage, a capacitor that smoothes an output voltage of the step-down converter, an inverter circuit that converts a charging voltage of the capacitor, which is an input DC voltage, to an AC voltage, and an output relay that opens and closes a connection path between an output end of the inverter circuit and a commercial power system, wherein the system interconnection inverter further includes: a power detection unit that detects an output voltage and an output current of the solar cell to obtain output power; a charging voltage detector that detects a charging voltage of the capacitor; a pre-interconnection converter control unit that controls an on-time width during which a switch element of the step-up converter is turned on so that the solar cell outputs predetermined power, based on output power of the solar cell detected by the power detection unit and a voltage detected by the charging voltage detector, before system interconnection during which an operation of the inverter circuit is stopped and the output relay is opened; a stabilized-operating-point search unit that performs a stabilization discrimination of an operating point of the solar cell in a period during which the pre-interconnection converter control unit turns on the switch element, and causes the pre-interconnection converter control unit to control the on-time width of the switch element repeatedly until the operating point is stabilized; and an interconnection determination unit that compares a preset determined power with output power of the solar cell obtained by the power detection unit when the stabilized-operating-point search unit detects a stabilized operating point, and when the output power of the solar cell is at least equal to the determined power, outputs an instruction to start interconnection with the commercial power system.

Advantageous Effects of Invention

The system interconnection inverter according to the present invention directly detects output power of a solar cell instead of computing the output power based on a charging voltage to a capacitor, finds an operating point at which the solar cell is stabilized by changing a gate pulse width that specifies an on-time width of a switch element of a converter, and performs a start-up determination by using the output power of the solar cell at the stabilized operating point. Accordingly, a standby time until start of the start-up determination is reduced, and a start-up determination can be performed highly accurately in a short time without being affected by the amount of solar radiation, even under low solar radiation.

Brief Description of Drawings

FIG. 1 is a system configuration diagram of a solar power generation system including a system interconnection inverter according to a first embodiment of the present invention.

FIG. 2 is a flowchart for explaining a control procedure for starting up the system interconnection inverter shown in FIG. 1.
FIG. 3 shows explanatory diagrams of a relation between an operating point of a solar cell and generated power thereof.
FIG. 4 is a system configuration diagram of a solar power generation system including a system interconnection inverter according to a second embodiment of the present invention.
FIG. 5 is a flowchart for explaining a control procedure for starting up the system interconnection inverter shown in FIG. 4.
FIG. 6 is a system diagram of a solar power generation system including a system interconnection inverter according to a third embodiment of the present invention.

Description of Embodiments

Exemplary embodiments of a system interconnection inverter according to the present invention will be explained below in detail with reference to the accompanying drawings. The present invention is not limited to the embodiments.

First embodiment

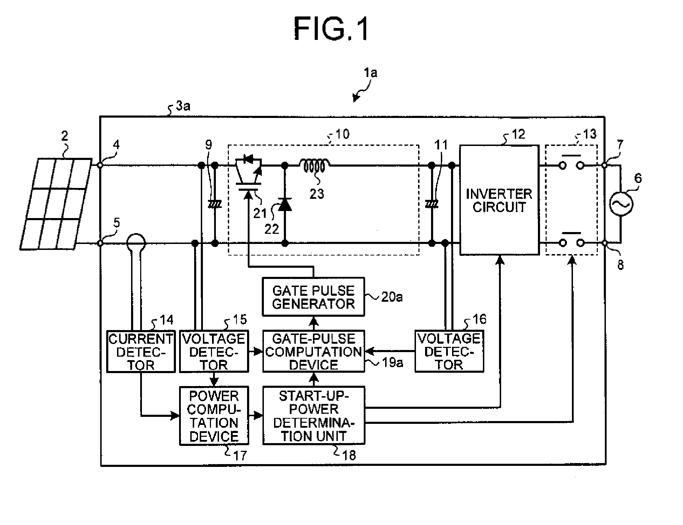

FIG. 1 is a system configuration diagram of a solar power generation system including a system interconnection inverter according to a first embodiment of the present invention. In FIG. 1, a solar power generation system 1a includes a solar cell 2 and a system interconnection inverter 3a according to the first embodiment.
The solar cell 2 is composed of a plurality of solar cell modules, and generates DC power according to the amount of solar radiation. The system interconnection inverter 3a includes a positive input terminal 4 and a negative input terminal 5, to which a positive output end and an negative output end of the solar cell 2 are respectively connected, and system output terminals 7 and 8, respectively connected to two lines of a commercial power system (a distribution system) 6.
The system interconnection inverter 3a according to the first embodiment has a configuration in which, in a system interconnection inverter using a step-down converter, start-up control whether to interconnect with the commercial power system 6 is executed. In a system interconnection inverter using the step-down converter, a smoothing capacitor 9, a step-down converter 10, a smoothing capacitor 11, an inverter circuit 12, and an output relay 13 are arranged in this order from the positive input terminal 4 and the negative input terminal 5 toward the system output terminals 7 and 8.
A connecting relation and the like are described below. The step-down converter 10 is configured of a switch element 21 in which diodes are connected in antiparallel, a diode 22, and a reactor 23. In FIG. 1, an IGBT is used for the switch element 21. A collector terminal of the switch element 21 is an input terminal of the step-down converter 10, and is connected to the positive input terminal 4. An emitter terminal of the switch element 21 is connected to a cathode terminal of the diode 22 and one end of the reactor 23. An anode terminal of the diode 22 is connected to a connection line between the negative input terminal 5 and a negative input end of the inverter circuit 12. The other end of the reactor 23 is an output terminal of the step-down converter 10, and is connected to a positive input end of the inverter circuit 12. A gate pulse signal generated by a gate pulse generator 20a based on a gate pulse width input from a gate-pulse computation device 19a is applied to a gate terminal of the switch element 21 in a period until interconnecting to a system.
The smoothing capacitor 9 is connected between a connection line between the positive input terminal 4 and the collector terminal of the switch element 21 and a connection line between the negative input terminal 5 and the negative input end of the inverter circuit 12, between the positive input terminal 4 and the step-down converter 10, to smooth a DC voltage input from the solar cell 2 to the step-down converter 10.
The smoothing capacitor 11 is connected between a connection line between the other end of the reactor 23 and the positive input end of the inverter circuit 12 and a connection line between the negative input terminal 5 and the negative input end of the inverter circuit 12, between the positive input terminal 4 and the step-down converter 10 to smooth an output voltage of the step-down converter 10, thereby forming a DC input voltage of the inverter circuit 12.
The inverter circuit 12 does not perform a converting operation and is in a stopped (standby) state until a start-up-power determination unit 18 outputs an interconnection start instruction. When the start-up-power determination unit 18 outputs the interconnection start instruction, the inverter circuit 12 starts an operation to convert a charging voltage of the smoothing capacitor 11 to an AC voltage. An AC output end of the inverter circuit 12 is connected to the system output terminals 7 and 8 via the output relay 13.

The output relay 13 is controlled to be an opened state until the start-up-power determination unit 18 outputs the interconnection start instruction. When the start-up-power determination unit 18 outputs the interconnection start instruction, the output relay 13 is controlled to be a closed state, thereby connecting the AC output end of the inverter circuit 12 to the commercial power system 6.

As a configuration for executing start-up control whether to interconnect such a step-down type system interconnection inverter to the commercial power system 6,

a current detector 14, voltage detectors 15 and 16, a power computation device 17, the start-up-power determination unit 18, the gate-pulse computation device 19a, and the gate pulse generator 20a are provided. In this configuration, the current detector 14, the voltage detector 15, and the power computation device 17 integrally constitute a power detection unit. The gate-pulse computation device 19a and the gate pulse generator 20a integrally constitute a pre-interconnection converter control unit. Furthermore, the start-up-power determination unit 18 constitutes a stabilized-operating-point search unit and an interconnection determination unit. The voltage detector 16 constitutes a charging voltage detector.

The voltage detector 15 is connected to the connection line between the positive input terminal 4 and the collector terminal of the switch element 21 at one detection end, and to the connection line between the negative input terminal 5 and the negative input end of the inverter circuit 12 at the other detection end, between the positive input terminal 4 and the step-down converter 10, thereby detecting an output voltage of the solar cell 2. The output voltage of the solar cell 2 detected by the voltage detector 15 is input to the power computation device 17.

A detection end of the current detector 14 is connected to a connection line between the negative input terminal 5 and the negative input end of the inverter circuit 12, for example, between the negative input terminal 5 and the step-down converter 10. An output current of the solar cell 2 detected by the current detector 14 is input to the power computation device 17.

The power computation device 17 multiplies the output voltage of the solar cell 2 detected by the voltage detector 15 by the output current of the solar cell 2 detected by the current detector 14 to obtain output power of the solar cell 2, and outputs the output power to the start-up-power determination unit 18.

The voltage detector 16 is connected to the connection line between a positive end of the smoothing capacitor 11 and the positive input end of the inverter circuit 12 at one detection end, and to the connection line between a negative end of the smoothing capacitor 11 and the negative input end of the inverter circuit 12 at the other detection end, thereby detecting a charging voltage of the smoothing capacitor 11, which is the DC input voltage to the inverter circuit 12. The charging voltage to the smoothing capacitor 11 detected by the voltage detector 16 (hereinafter, simply "capacitor charging voltage") is input to the gate-pulse computation device 19a.

The gate-pulse computation device 19a computes a gate pulse width, which is a time width during which the switch element 21 required for outputting predetermined power from the solar cell 2 is turned on, based on the output voltage of the solar cell detected by the voltage detector 15 and the capacitor charging voltage detected by the voltage detector 16, in a period of a start-up determination for determining whether to interconnect to the system, and outputs the gate pulse width to the gate pulse generator 20a. The gate-pulse computation device 19a repeatedly computes the gate pulse width until it is notified that the operating point is stabilized from the start-up-power determination unit 18. The gate pulse generator 20a generates a gate pulse signal to turn on the switch element 21 based on the specified gate pulse width.

Specifically, the gate-pulse computation device 19a computes the gate pulse width in the following manner. In the period of a start-up determination for determining whether to interconnect to the system, it is determined whether the amount of power generated by the solar cell 2 is sufficient in a state with an operation of the inverter circuit 12 being stopped. Therefore, a step-down operation of the step-down converter 9 does not cause any problem. Accordingly, a switching frequency f of the step-down converter 9 can be constant or variable; however, it is assumed here that the switching frequency f has a constant value for the convenience of explanation.

A load current (a charging current) flowing in the reactor 23 in the period during which the switch element 21 is turned on reflects the amount of power generated by the solar cell 2. Because an inductance L of the reactor 23 is a fixed value, if charging power P [W] to the smoothing capacitor 11 is specified as a predetermined value, a gate pulse width D of the switch element 21 required for charging the smoothing capacitor 11 by the charging power P [W] by the solar cell 2 is determined by an output voltage Vs of the solar cell 2 detected by the voltage detector 15 and a capacitor charging voltage Vs2 detected by the voltage detector 16.

That is, a load current $I_L$ flowing in the reactor 23 when the switch element 21 is turned on with the gate pulse width D is expressed by the following equation (1).

$$I_L = (Vs - Vc2) * D/L/f \hspace{4cm} (1)$$

Furthermore, when the load current $I_L$ indicated in the equation (1) flows to the reactor 23, the charging power P [W] to the smoothing capacitor 11 from the solar cell 2 is expressed by the following equation (2).

$$P = L * I_L{}^2 * f / 2 \qquad\qquad (2)$$

Therefore, from the equations (1) and (2), the gate pulse width D of the switch element 21 required for charging the smoothing capacitor 11 by the charging power P [W] by the solar cell 2 is obtained as:

$$D = (\sqrt{(2 * P * L * f)}) / (Vs - Vc2) \qquad\qquad (3).$$

The charging power P [W] to the smoothing capacitor 11 from the solar cell 2 has the same value as the output power of the solar cell 2.

The charging power in the equation (3) (that is, input power to the inverter circuit 12) P [W] is defined as follows. Because the system interconnection inverter 3a is operating by the generated energy of the solar cell 2, the charging power P [W] in the equation (3) is defined as a minimum value of the output power of the solar cell required for enabling a stable operation of the system interconnection inverter 3a. The minimum value is designated as Pok [W]. The minimum value Pok [W] is set to, for example, 40 watts for the convenience of explanation.

The start-up-power determination unit 18 includes a stabilization discrimination unit in an input stage and a start-up determination unit in an output stage.
The stabilization discrimination unit performs a stabilization discrimination of the operating point of the solar cell 2 in the period during which the switch element 21 is turned on, with the gate pulse width computed by the gate-pulse computation device 19a, for example, (1) based on the output power of the solar cell 2 or (2) based on a time during which the gate pulse width is repeatedly controlled. The stabilization discrimination unit notifies the gate-pulse computation device 19a of a stabilization discrimination result. The gate-pulse computation device 19a determines whether to repeat or discontinue computation of the gate pulse width according to the content of the stabilization discrimination result.

(1) Stabilization discrimination method based on the output power of the solar cell 2:

When the output power of the solar cell 2 is equal to or higher than 40 watts, because the operating point is stabilized at which the output power is 40 watts, a stabilization discrimination method is performed according to whether a change width of the output power of the solar cell input from the power computation device 17 falls within a specified range. Furthermore, when the output power of the solar cell 2 is lower than 40 watts, because there is no operating point at which the output power is 40 watts, the gate pulse width continues to increase, the solar cell 2 becomes short-circuited, and the output power of the solar cell 2 becomes zero. Although the switch element 21 is driven with the computed gate pulse width, if the generated power of the solar cell 2 becomes zero, it is determined that the operating point is stabilized.

(2) Stabilization discrimination method based on time during which the gate pulse width is repeatedly controlled:

When the switch element 21 is driven with the computed gate pulse width for a certain period of time, when the output power of the solar cell 2 is equal to or higher than 40 watts, the operating point is stabilized at 40 watts, and when the output power of the solar cell 2 is lower than 40 watts, the output power of the solar cell 2 becomes 0 watt, and thus the stabilization discrimination can be performed according to the time during which the gate pulse width is repeatedly controlled. The set time can be a sufficiently long time, however, the set time needs only to be set to the time until the operating point is stabilized at 40 watts or longer when the output power of the solar cell 2 is equal to or higher than 40 watts. When the output power of the solar cell 2 is lower than 40 watts, the output power of the solar cell 2 does not exceed 40 watts within the set time, and thus the set time does not need to be set to the time until the output power of the solar cell 2 becomes 0 watt.

When a stabilization discrimination result from the stabilization discrimination unit indicates that the operating point of the solar cell 2 is stabilized, the start-up determination unit determines whether the output power of the solar cell input from the power computation device 17 exceeds determined power (predetermined start-up enabled power), and when the output power of the solar cell is at least equal to the determined power, the stabilization discrimination unit outputs an instruction to start system interconnection to a control unit (not shown) of the system interconnection inverter 3a.

In the start-up determination unit, "Pok-α (=40-) α)" is preset as the determined power. α is an output error component, assuming a case where the solar cell 2 cannot output the minimum power 40 watts according to an inductance value of the reactor 23 or the detection accuracy of the voltage detectors 15 and 16, even if the switch element 21 of the step-down converter 10 is driven with the gate pulse width D obtained by applying the equation (3).

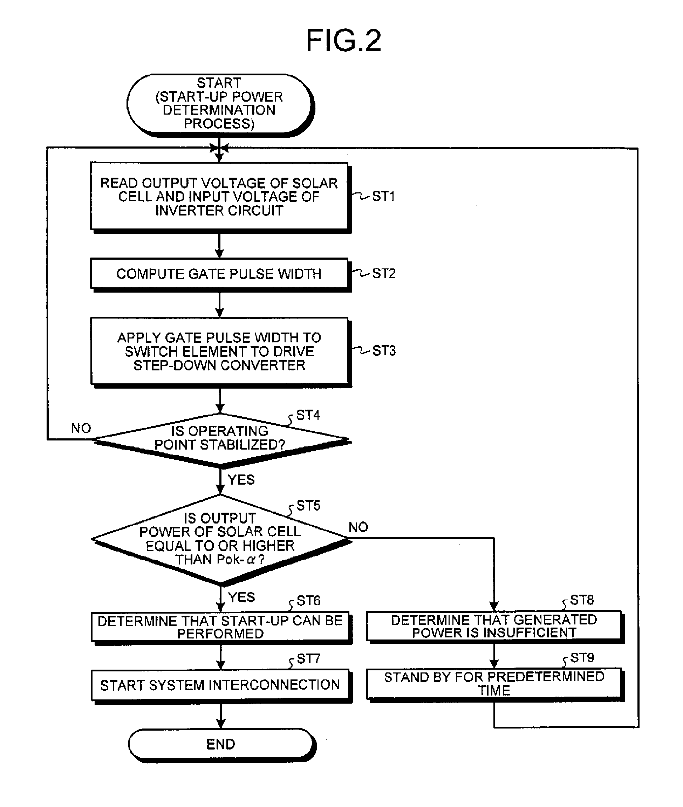

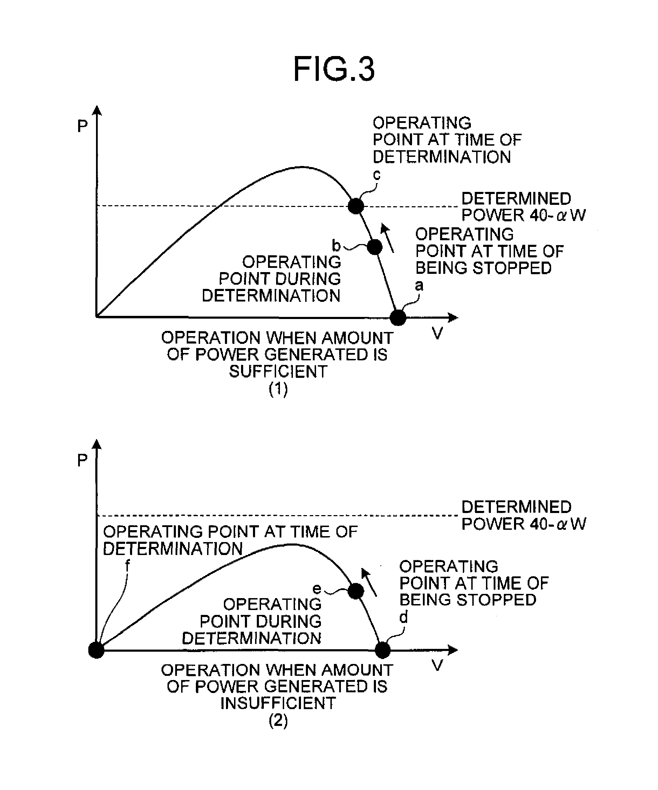

A control operation to perform system interconnection is explained with reference to FIGS. 2 and 3. FIG. 2 is a flowchart for explaining a control procedure for starting up the system interconnection inverter shown in FIG. 1. FIG. 3 shows explanatory diagrams of a relation between the operating point of the solar cell and the generated power thereof. FIG. 3(1) represents a case where the amount of power generated by the solar cell is sufficient, and FIG. 3(2) represents a case where the amount of power generated by the solar cell is insufficient. In FIG. 3, the horizontal axis denotes a solar-cell output voltage V, and the vertical axis denotes solar-cell output power P. In the explanations of FIG. 2, "step" representing a process procedure is simply abbreviated as "ST".

In FIG. 2, the gate-pulse computation device 19a reads the output voltage of the solar cell 2 detected by the voltage detector 15 and the charging voltage of the smoothing capacitor 11 detected by the voltage detector 16 (ST1), to compute the gate pulse width D by applying the read output voltage and the charging voltage to the equation (3) (ST2).

Upon input of the gate pulse width D from the gate-pulse computation device 19a, the gate pulse generator 20a generates a gate pulse signal, which turns on the switch element 21 during a period of the gate pulse width D, to drive the step-down converter 10 (ST3).

Accordingly, a predetermined charging current flows to the reactor 23, and the smoothing capacitor 11 is charged by the predetermined power. A change in the output power of the solar cell is detected by the power computation device 17, which is then input to the start-up-power determination unit 18. The start-up-power determination unit 18 performs a stabilization discrimination according to whether a change width of the output power of the solar cell input from the power computation device 17 falls within a predetermined range or whether the generated power of the solar cell is 0 watt (ST4).

At ST4, if the change width of the output power of the solar cell does not fall within the predetermined range, the start-up-power determination unit 18 determines that the operating point is not stabilized (NO at ST4), and notifies the gate-pulse computation device 19a of this matter. Processing operations at ST1 to ST4 are executed again. That is, upon reception of the notification that the operating point is not stabilized from the start-up-power determination unit 18, the gate-pulse computation device 19a computes the next gate pulse width D. In the repetition process of ST1 to ST4, the charging power P in the equation (3) has a constant value of 40 watts. However, because the solar-cell output voltage Vs and the capacitor charging voltage Vc2 change, the next gate pulse width D changes. Accordingly, the operating point of the solar cell 2 changes as shown in FIG. 3.

When the start-up-power determination unit 18 determines that the operating point of the solar cell 2 is stabilized at ST4 in the repetition process of ST1 to ST4 (YES at ST4), the start-up-power determination unit 18 notifies the gate-pulse computation device 19a that the operating point of the solar cell 2 is stabilized, and compares the output power of the solar cell input from the power computation device 17 with the determined power Pok-$\alpha$ (=40-$\alpha$), to check a magnitude relation thereof (ST5).

The gate-pulse computation device 19a discontinues the computing operation upon reception of the notification that the operating point is stabilized from the start-up-power determination unit 18.

At ST5, if the output power of the solar cell is equal to or exceeds the determined power Pok-$\alpha$ (YES at ST5), the start-up-power determination unit 18 determines that start-up can be performed (ST7), and outputs an instruction to start system interconnection to a control unit (not shown), to finish the procedure.

Upon input of the system interconnection start instruction, the control unit (not shown) instructs the gate pulse generator 20a to switch to the operation at the time of system interconnection, so that the inverter circuit 12 starts a converting operation and the output relay 13 is closed. Accordingly, the output end of the inverter circuit 12 is connected to the system output terminals 7 and 8, to start power supply to the commercial power system 6. When causing the step-down converter 10 to perform a step-down operation, the gate pulse generator 20a applies a switching frequency for the step-down operation and a gate pulse signal generated by a duty to the switch element 21. Furthermore, when causing the step-down converter 10 to perform a bypass operation, the gate pulse generator 20a applies a gate pulse signal for turning on the switch element 21 at all times to the switch element 21.

On the other hand, if the output power of the solar cell is smaller than the determined power Pok-$\alpha$ at ST5 (NO at ST5), the start-up-power determination unit 18 determines that the generated power is insufficient (ST8), and outputs an instruction to start a computing operation to the gate-pulse computation device 19a after waiting for a predetermined time (ST9). That is, the processes after ST1 are executed again.

A transition of the operating point of the solar cell 2 is explained next with reference to FIG. 3.

In FIG. 3, operating points a and d are operating points in a stopped state where the switch element 21 of the step-down converter 10 is turned off. The output voltage of the solar cell 2 detected by the voltage detector 15 is no-load voltage of the solar cell 2. The output power of the solar cell 2 is zero. The voltage detected by the voltage detector 16 is zero if the previous charging voltage is not left in the smoothing capacitor 11.

First, in this state, the gate-pulse computation device 19a computes the gate pulse width D, and the switch element 21 of the step-down converter 10 is turned on for the period of the gate pulse width D. Because the charging current as the load current flows to the smoothing capacitor 11, and the output voltage of the solar cell 2 decreases from the no-load voltage, the operating points of the solar cell 2 change to operating points b and e, respectively.

As a result of the stabilization discrimination at the operating points b and e, if it is determined that the operating points have not been stabilized, the gate-pulse computation device 19a computes the gate pulse width D again, and the switch element 21 of the step-down converter 10 is turned on for the period of a new gate pulse width D. Consequently, the operating points of the solar cell 2 change to the next operating points, and a stabilization discrimination is performed. The above operation is repeated until the operating points of the solar cell 2 move to stabilized operating points (the operating points c and operating points f at the time of a determination). The operating points b and e are an example of operating points during a determination.

The output power of the solar cell at the stabilized operating point c in FIG. 3(1), at which the amount of power generated is equal to or higher than the minimum value Pok (40 watts), is equal to the determined power 40-$\alpha$, and thus it is determined that start-up can be performed. On the other hand, output power of the solar cell at the stabilized operating point f in FIG. 3(2), at which the amount of power generated is less than the minimum value Pok (40 watts), is 0 watt and has not reached the determined power 40-$\alpha$, and thus it is determined that the generated power is insufficient.

As described above, according to the first embodiment, output power of the solar cell is directly detected instead of computing the output power based on the charging voltage of the capacitor, a stabilized operating point of the solar cell is found by changing the gate pulse width that specifies the on-time width of the switch element of the step-down converter, and a start-up determination is performed by using the output power at the stabilized operating point. Accordingly, the standby time until start of the start-up determination is shortened, and a start-up determination can be performed highly accurately in a short time without being affected by the amount of solar radiation, even under low solar radiation.

Second embodiment.

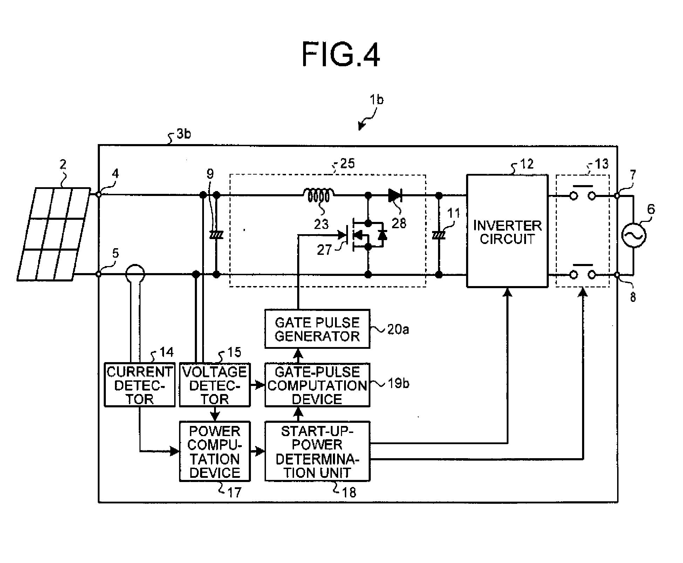

FIG. 4 is a system configuration diagram of a solar power generation system including a system interconnection inverter according to a second embodiment of the present invention. In FIG. 4, configuring elements identical or equivalent to those shown in FIG. 1 (the first embodiment) are denoted by like reference signs. Features relevant to the second embodiment are mainly explained below.

In FIG. 4, a system interconnection inverter 3b according to the second embodiment includes a step-up converter 25 instead of the step-down converter 10 and a gate-pulse computation device 19b instead of the gate-pulse computation device 19a, and the voltage detector 16 is eliminated from the configuration shown in FIG. 1 (the first embodiment). Configurations in FIG. 4 other than this feature are the same as those shown in FIG. 1.

The step-up converter 25 is configured of the reactor 23, a switch element 27 in which diodes are connected in antiparallel, and a diode 28 for preventing reverse flow. While an NMOS transistor is used for the switch element 27 in FIG. 4, an IGBT can be also used.

One end of the reactor 23 is an input terminal of the step-up converter 25, and is connected to the positive input terminal 4. The other end of the reactor 23 is connected to a drain terminal of the switch element 27 and to an anode terminal of the diode 28. A cathode terminal of the diode 28 is an output terminal of the step-up converter 25, and is connected to the positive input end of the inverter circuit 12. A source terminal of the switch element 27 is connected to a connection line between the negative input terminal 5 and a negative input end of the inverter circuit 12.

Also in the system interconnection inverter 3b using the step-up converter 25, the switching frequency f of the step-up converter 25 can be constant or variable as in the first embodiment, during the period of a start-up determination for determining whether to interconnect to the system; however, it is assumed here that the switching frequency f has a constant value for the convenience of explanation. In the step-up converter 25, a charging current for charging desired power to the smoothing capacitor 11 flows to the reactor 23 in the period during which the switch element 27 is turned on.

The gate-pulse computation device 19b computes a gate pulse width, which is a time width during which the switch element 21 required for outputting predetermined power from the solar cell 2 is turned on, based on the output voltage of the solar cell detected by the voltage detector 15, in the period of a start-up determination for determining whether to interconnect to the system, and outputs the gate pulse width to the gate pulse generator 20a. The gate-pulse computation device 19b repeatedly computes the gate pulse width until it is notified that the operating point is stabilized from the start-up-power determination unit 18. The gate pulse generator 20a generates a gate pulse signal to turn on the switch element 27 based on the specified gate pulse width.

Specifically, the gate-pulse computation device 19a computes the gate pulse width in the following manner. Because an inductance L of the reactor 23 is a fixed value, if the charging power P [W] to the smoothing capacitor 11 is specified as a predetermined value, the gate pulse width D of the switch element 27 required for charging the smoothing capacitor 11 by the charging power P [W] by the solar cell 2 is determined by the output voltage Vs of the solar cell 2 detected by the voltage detector 15.

That is, the load current $I_L$ flowing in the reactor 23 when the switch element 27 is turned on with the gate pulse width D is expressed by the following equation (4).

$$I_L = Vs*D/L/f \qquad\qquad (4)$$

Furthermore, when the load current $I_L$ indicated in the equation (4) flows to the reactor 23, the charging power P [W] to the smoothing capacitor 11 from the solar cell 2 is expressed by the following equation (5).

$$P = L*I_L^2*f/2 \qquad\qquad (5)$$

Therefore, from the equations (4) and (5), the gate pulse width D of the switch element 27 required for charging the smoothing capacitor 11 by the charging power P [W] by the solar cell 2 is obtained as:

$$D = (\sqrt{(2*P*L*f)})/Vs \qquad\qquad (6).$$

The charging power P [W] to the smoothing capacitor 11 from the solar cell 2 has the same value as the output power of the solar cell 2.

The charging power in the equation (6) (that is, input power to the inverter circuit 12) P [W] is defined as the minimum value Pok [W] of the output power of the solar cell required for enabling a stable operation of the system interconnection inverter 3b, as in the first embodiment. The determined power held by the start-up-power determination unit 18 is Pok-$\alpha$.

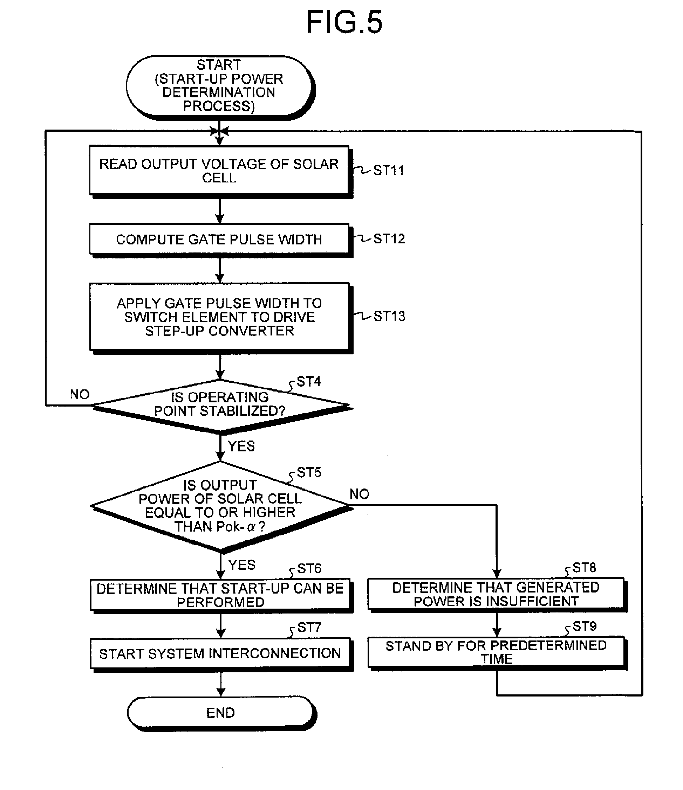

FIG. 5 is a flowchart for explaining a control procedure for starting up the system interconnection inverter shown in FIG. 4. In FIG. 5, ST1 to ST3 in FIG. 2 are denoted as ST11 to ST13. Steps in FIG. 5 other than these are the same as those shown in FIG. 2.

In FIG. 5, the gate-pulse computation device 19b reads an output voltage of the solar cell 2 detected by the voltage detector 15 (ST11), to compute the gate pulse width D by applying the read output voltage to the equation (6) (ST12).

Upon input of the gate pulse width D from the gate-pulse computation device 19b, the gate pulse generator 20a generates a gate pulse signal, which turns on the switch element 27 during a period of the gate pulse width D, to drive the step-up converter 25 (ST13).

With this operation, the charging current $I_L$ indicated in the equation (4) flows to the reactor 23, and the charging power P to be determined, which is indicated in the equation (5), is detected by the power computation device 17 and is input to the start-up-power determination unit 18. The start-up-power determination unit 18 performs a stabilization discrimination of the operating point (ST4) according to whether a change width in the output power of the solar cell input from the power computation device 17 falls within a predetermined range or the generated power of the solar cell is 0 watt. Thereafter, the same processing as in the first embodiment is performed.

When an instruction to start system interconnection is output (ST7), the gate pulse generator 20a switches to the operation to generate a gate pulse signal for causing the step-up converter 25 to perform a step-up operation and a bypass operation. At the time of performing the step-up operation, the switching frequency for the step-up operation and a gate pulse signal generated by a duty are applied to the switch element 27. At the time of performing the bypass operation, a gate pulse signal for turning off the switch element 27 at all times is applied to the switch element 27.

According to the second embodiment, even when the converter is a step-up converter, effects and advantages similar to those in the first embodiment can be achieved.

Third embodiment.

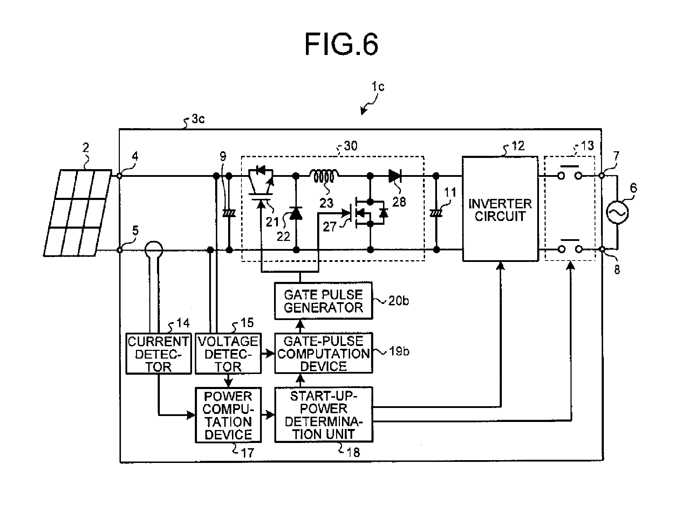

FIG. 6 is a system diagram of a solar power generation system including a system interconnection inverter according to a third embodiment of the present invention. In FIG. 6, configuring elements identical or equivalent to those shown in FIG. 4 (the second embodiment) are denoted by like reference signs. Features relevant to the third embodiment are mainly explained below.

In FIG. 6, a system interconnection inverter 3c according to the third embodiment includes a step-up/step-down converter 30 instead of the step-up converter 25 and a gate pulse generator 20b instead of the gate pulse generator 20a in the configuration shown in FIG. 4 (the second embodiment). Configurations in FIG. 6 other than this feature are the same as those shown in FIG. 4.

The step-up/step-down converter 30 is configured of the switch elements 21 and 27 in which diodes are connected in antiparallel, the reactor 23, and the diodes 22 and 28. The switch element 21, the reactor 23, and the diode 22 configure a step-down circuit, and the reactor 23, the switch element 27, and the diode 28 configure a step-up circuit.

A collector terminal of the switch element 21 is an input terminal of the step-up/step-down converter 30, and is connected to the positive input terminal 4. An emitter terminal of the switch element 21 is connected to a cathode terminal of the diode 23 and one end of the reactor 23. An anode terminal of the diode 23 is connected to a connection line between the negative input terminal 5 and a negative input end of the inverter circuit 12.

The other end of the reactor 23 is connected to a drain terminal of the switch element 27 and an anode terminal of the diode 28. A source terminal of the switch element 27 is connected to the connection line between the negative input terminal 5 and the negative input end of the inverter circuit 12. A cathode terminal of the diode 28 is an output terminal of the step-up/step-down converter 30, and is connected to the positive input end of the inverter circuit 12.

In the third embodiment, a stabilization discrimination for determining whether to interconnect to the system is performed before system interconnection. Therefore, the two switch elements 21 and 27 of the step-up/step-down converter 30 are applied with the same gate pulse signal from the gate pulse generator 20b, and controlled to be turned on simultaneously during the period of the gate pulse width D computed by the gate-pulse computation device 19b by using the equation (6).

Accordingly, the charging current $I_L$ indicated in the equation (4) flows to the reactor 23, which is commonly used by the step-down circuit and the step-up circuit, and the charging power P to be determined, which is indicated in the equation (5), is detected by the power computation device 17, thereby enabling to determine whether to start up the system interconnection inverter by the start-up-power determination unit 18.

The flowchart for explaining the control procedure for starting up the system interconnection inverter 3c according to the third embodiment is different from the second embodiment only in that, although not shown, at ST13, "Drive the step-up/step-down converter 30 by applying the same gate pulse signal to the two switch elements 21 and 27", in FIG. 5.

In FIG. 5, when an instruction to start system interconnection is output (ST7), the gate pulse generator 20b switches to an operation to apply the gate pulse signal separately to the switch element 21 and the switch element 27, according to the operation (the step-down operation, the step-up operation, or the bypass operation) required for the step-up/step-down converter 30.

That is, when causing the step-up/step-down converter 30 to perform the step-down operation, the gate pulse generator 20b applies a switching frequency for the step-down operation and a gate pulse signal generated by a duty to the switch element 21, and applies a gate pulse signal, which turns off the switch element 27 at all times, to the switch element 27. When causing the step-up/step-down converter 30 to perform the step-up operation, the gate pulse generator 20b applies a gate pulse signal, which turns on the switch element 21 at all times, to the switch element 21, and applies a switching frequency for the step-up operation and a gate pulse signal generated by a duty to the switch element 27. When causing the step-up/step-down converter 30 to perform the bypass operation, the gate pulse generator 20b applies a gate pulse signal, which turns on the switch element 21 at all times, to the switch element 21, and applies a gate pulse signal, which turns off the switch element 27 at all times, to the switch element 27.

According to the third embodiment, even when the converter is a step-up converter, effects and advantages identical to those in the first embodiment can be achieved.

Industrial Applicability

As described above, the system interconnection inverter according to the present invention is useful as a system interconnection inverter that is used in a solar power generation system and can perform a start-up determination highly accurately in a short time without being affected by the amount of solar radiation, while making a standby time until start of the start-up determination be short.

Reference Signs List

1a, 1b, 1c SOLAR POWER GENERATION SYSTEM

| | |
|---|---|
| 2 | SOLAR CELL |
| 3a, 3b, 3c | SYSTEM INTERCONNECTION INVERTER |
| 6 | COMMERCIAL POWER SYSTEM |
| 9, 11 | SMOOTHING CAPACITOR |
| 10 | STEP-DOWN CONVERTER |
| 12 | INVERTER CIRCUIT |
| 13 | OUTPUT RELAY |
| 14 | CURRENT DETECTOR |
| 15, 16 | VOLTAGE DETECTOR |

| 17 | POWER COMPUTATION DEVICE |
|---|---|
| 18 | START-UP-POWER DETERMINATION UNIT |
| 19a, 19b | GATE-PULSE COMPUTATION DEVICE |
| 20a, 20b | GATE PULSE GENERATOR |
| 21, 27 | SWITCH ELEMENT |
| 25 | STEP-UP CONVERTER |
| 30 | STEP-UP/STEP-DOWN CONVERTER |

**Claims**

1. A system interconnection inverter comprising a step-down converter that steps down a DC voltage output from a solar cell to a desired DC voltage, a capacitor that smoothes an output voltage of the step-down converter, an inverter circuit that converts a charging voltage of the capacitor, which is an input DC voltage, to an AC voltage, and an output relay that opens and closes a connection path between an output end of the inverter circuit and a commercial power system, wherein
the system interconnection inverter further comprises:

   a power detection unit that detects an output voltage and an output current of the solar cell to obtain output power;
   a charging voltage detector that detects a charging voltage of the capacitor;
   a pre-interconnection converter control unit that controls a time width during which a switch element of the step-up converter is turned on so that the solar cell outputs predetermined power, based on output power of the solar cell detected by the power detection unit and a voltage detected by the charging voltage detector, in a period before system interconnection is performed during which an operation of the inverter circuit is stopped and the output relay is opened;
   a stabilized-operating-point search unit that performs a stabilization discrimination of an operating point of the solar cell in a period during which the pre-interconnection converter control unit turns on the switch element, and causes the pre-interconnection converter control unit to control the on-time width of the switch element repeatedly until the operating point is stabilized; and
   an interconnection determination unit that compares a preset determined power with output power of the solar cell obtained by the power detection unit when the stabilized-operating-point search unit detects a stabilized operating point, and when the output power of the solar cell is at least equal to the determined power, outputs an instruction to start interconnection with the commercial power system.

2. The system interconnection inverter according to claim 1, wherein the stabilized-operating-point search unit performs a stabilization discrimination of the operating point of the solar cell based on output power of the solar cell obtained by the power detection unit.

3. The system interconnection inverter according to claim 1, wherein the stabilized-operating-point search unit performs a stabilization discrimination of the operating point of the solar cell according to a time during which the on-time width of the switch element is repeatedly controlled by the pre-interconnection converter control unit.

4. A system interconnection inverter comprising a step-up converter that steps up a DC voltage output from a solar cell to a desired DC voltage, a capacitor that smoothes an output voltage of the step-up converter, an inverter circuit that converts a charging voltage of the capacitor, which is an input DC voltage, to an AC voltage, and an output relay that opens and closes a connection path between an output end of the inverter circuit and a commercial power system, wherein
the system interconnection inverter further comprises:

   a power detection unit that detects an output voltage and an output current of the solar cell to obtain output power;
   a pre-interconnection converter control unit that controls a time width during which a switch element of the step-up converter is turned on so that the solar cell outputs predetermined power, based on output power of the solar cell detected by the power detection unit, in a period before system interconnection is performed during which an operation of the inverter circuit is stopped and the output relay is opened;
   a stabilized-operating-point search unit that performs a stabilization discrimination of an operating point of the solar cell in a period during which the pre-interconnection converter control unit turns on the switch element, and causes the pre-interconnection converter control unit to control the on-time width of the switch element repeatedly until the operating point is stabilized; and

an interconnection determination unit that compares a preset determined power with output power of the solar cell obtained by the power detection unit when the stabilized-operating-point search unit detects a stabilized operating point, and when the output power of the solar cell is at least equal to the determined power, outputs an instruction to start interconnection with the commercial power system.

5. The system interconnection inverter according to claim 4, wherein the stabilized-operating-point search unit performs a stabilization discrimination of the operating point of the solar cell based on output power of the solar cell obtained by the power detection unit.

6. The system interconnection inverter according to claim 4, wherein the stabilized-operating-point search unit performs a stabilization discrimination of the operating point of the solar cell according to a time during which the on-time width of the switch element is repeatedly controlled by the pre-interconnection converter control unit.

7. A system interconnection inverter comprising a step-up/step-down converter that steps up and steps down a DC voltage output from a solar cell to a desired DC voltage, a capacitor that smoothes an output voltage of the step-up/step-down converter, an inverter circuit that converts a charging voltage of the capacitor, which is an input DC voltage, to an AC voltage, and an output relay that opens and closes a connection path between an output end of the inverter circuit and a commercial power system, wherein
the system interconnection inverter further comprises:

a power detection unit that detects an output voltage and an output current of the solar cell to obtain output power;
a pre-interconnection converter control unit that controls a time width during which two switch elements of the step-up/step-down converter are turned on simultaneously so that the solar cell outputs predetermined power, based on output power of the solar cell detected by the power detection unit, in a period before system interconnection is performed during which an operation of the inverter circuit is stopped and the output relay is opened;
a stabilized-operating-point search unit that performs a stabilization discrimination of an operating point of the solar cell in a period during which the pre-interconnection converter control unit turns on the two switch elements simultaneously, and causes the pre-interconnection converter control unit to repeatedly control the time width during which the two switch elements are turned on simultaneously until the operating point is stabilized; and
an interconnection determination unit that compares a preset determined power with output power of the solar cell obtained by the power detection unit when the stabilized-operating-point search unit detects a stabilized operating point, and when the output power of the solar cell is at least equal to the determined power, outputs an instruction to start interconnection with the commercial power system.

8. The system interconnection inverter according to claim 7, wherein the stabilized-operating-point search unit performs a stabilization discrimination of the operating point of the solar cell based on output power of the solar cell obtained by the power detection unit.

9. The system interconnection inverter according to claim 7, wherein the stabilized-operating-point search unit performs a stabilization discrimination of the operating point of the solar cell according to a time during which the on-time width of the switch element is repeatedly controlled by the pre-interconnection converter control unit.

# FIG.1

# FIG.2

```
        START
  (START-UP POWER
   DETERMINATION
      PROCESS)
         │
         ▼
┌─────────────────────────┐
│ READ OUTPUT VOLTAGE OF  │
│ SOLAR CELL AND INPUT    │ ⌁ST1
│ VOLTAGE OF INVERTER     │
│ CIRCUIT                 │
└─────────────────────────┘
         │
         ▼
┌─────────────────────────┐
│ COMPUTE GATE PULSE WIDTH│ ⌁ST2
└─────────────────────────┘
         │
         ▼
┌─────────────────────────┐
│ APPLY GATE PULSE WIDTH  │
│ TO SWITCH ELEMENT TO    │ ⌁ST3
│ DRIVE STEP-DOWN         │
│ CONVERTER               │
└─────────────────────────┘
         │
         ▼            ST4
NO    ◇ IS OPERATING ◇
◄─────  POINT STABILIZED?
         │
        YES
         │
         ▼            ST5
       ◇ IS OUTPUT    ◇
       POWER OF SOLAR CELL   NO
       EQUAL TO OR HIGHER ─────────►
       THAN Pok-α ?
         │
        YES   ST6
```

IS OUTPUT POWER OF SOLAR CELL EQUAL TO OR HIGHER THAN Pok-$\alpha$ ?

ST6 DETERMINE THAT START-UP CAN BE PERFORMED

ST7 START SYSTEM INTERCONNECTION

ST8 DETERMINE THAT GENERATED POWER IS INSUFFICIENT

ST9 STAND BY FOR PREDETERMINED TIME

END

# FIG.3

P

OPERATING
POINT AT TIME OF
DETERMINATION
c

DETERMINED
POWER 40-$\alpha$ W

b

OPERATING
POINT AT TIME OF
BEING STOPPED

OPERATING
POINT DURING
DETERMINATION

a

OPERATION WHEN AMOUNT
OF POWER GENERATED IS
SUFFICIENT
(1)

V

P

DETERMINED
POWER 40-$\alpha$ W

OPERATING POINT AT TIME OF
DETERMINATION
f

OPERATING
POINT AT TIME OF
BEING STOPPED

e

OPERATING
POINT DURING
DETERMINATION

d

OPERATION WHEN AMOUNT
OF POWER GENERATED IS
INSUFFICIENT
(2)

V

15

EP 2 566 031 A1

# FIG.4

# FIG.5

```
        START
   (START-UP POWER
     DETERMINATION
       PROCESS)
```

READ OUTPUT VOLTAGE OF SOLAR CELL — ST11

COMPUTE GATE PULSE WIDTH — ST12

APPLY GATE PULSE WIDTH TO SWITCH ELEMENT TO DRIVE STEP-UP CONVERTER — ST13

ST4 — IS OPERATING POINT STABILIZED? — NO

YES

ST5 — IS OUTPUT POWER OF SOLAR CELL EQUAL TO OR HIGHER THAN Pok-$\alpha$? — NO

YES

ST6 — DETERMINE THAT START-UP CAN BE PERFORMED

ST7 — START SYSTEM INTERCONNECTION

ST8 — DETERMINE THAT GENERATED POWER IS INSUFFICIENT

ST9 — STAND BY FOR PREDETERMINED TIME

END

# FIG.6

INVERTER
CIRCUIT

GATE PULSE
GENERATOR ~20b

CURRENT
DETEC-
TOR

VOLTAGE
DETEC-
TOR

GATE-PULSE
COMPUTATION
DEVICE ~19b

POWER
COMPU-
TATION
DEVICE

START-UP-
POWER
DETERMINA-
TION UNIT

<div align="center">

**INTERNATIONAL SEARCH REPORT**

</div>

| | International application No. |
|---|---|
| | PCT/JP2010/057386 |

| A. CLASSIFICATION OF SUBJECT MATTER |
|---|
| *H02M7/48*(2007.01)i |
| |
| According to International Patent Classification (IPC) or to both national classification and IPC |

| B. FIELDS SEARCHED |
|---|
| Minimum documentation searched (classification system followed by classification symbols) |
| H02M7/48 |
| |
| Documentation searched other than minimum documentation to the extent that such documents are included in the fields searched |
|   Jitsuyo Shinan Koho      1922-1996  Jitsuyo Shinan Toroku Koho  1996-2010<br>  Kokai Jitsuyo Shinan Koho  1971-2010  Toroku Jitsuyo Shinan Koho   1994-2010 |
| |
| Electronic data base consulted during the international search (name of data base and, where practicable, search terms used) |
| |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2009-247184 A  (Mitsubishi Electric Corp.),<br>22 October 2009 (22.10.2009),<br>paragraphs [0014] to [0022]; fig. 1 to 3<br>(Family: none) | 1-9 |
| A | WO 2008/029711 A1  (TOSHIBA CARRIER CORP.),<br>13 March 2008 (13.03.2008),<br>paragraphs [0016], [0033] to [0041]; fig. 1 to<br>5<br>(Family: none) | 1-9 |
| A | JP 2002-142463 A  (Sharp Corp.),<br>17 May 2002 (17.05.2002),<br>paragraphs [0038] to [0044]; fig. 1 to 2<br>(Family: none) | 1-9 |

☐ Further documents are listed in the continuation of Box C.      ☐ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>   31 May, 2010 (31.05.10) | Date of mailing of the international search report<br>   08 June, 2010 (08.06.10) |
| Name and mailing address of the ISA/<br>   Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009247184 A